# EUROPEAN PATENT APPLICATION

(11) **EP 1 995 552 A1**
(43) Date of publication of application: **26.11.2008**
(21) Application number: 08151838.3
(22) Date of filing: 22.02.2008
(51) Int. Cl.: G01B 11/02, B05B 1/00

(54) **Device for detecting the transit or characteristics of dimensions of panels or other basically flat parts placed on a conveyor line, and for controlling subsequent processing means**

(30) Priority: 18.04.2007 IT BO20070280
(71) Applicant: CEFLA SOCIETA' COOPERATIVA, 40026 Imola (BO) (IT)
(72) Inventor: Franzoni, Luigi, I-40026 Imola (IT); Raggi, Gianni, I-40026 Imola (IT)
(74) Representative: Porsia, Dino

(57) **Abstract**

The device for detecting the transit and/or characteristics of dimensions and/or form of panels or other basically flat parts on a conveyor line, and for controlling any processing means, for example in order to control the activation, deactivation and movement of the guns to spray paint or other products onto the said parts during transit through the booth of an automatic spraying machine, comprises one or more laser sources (1) with a suitable power level, or other suitable means which can generate a sheet of light (101) directed onto the parts in transit, the said laser source(s) being oriented with its/their longitudinal axis such as to form in relation to the parts-carrying conveyor below an angle (A) of less than 90°, and with an amplitude such that the line of laser light (201, 201') projected by it/them transversely onto the said conveyor and/or onto the upper surface of the panel can be detected or otherwise by the appropriately oriented field of view or viewing plane (102) of at least one photodiode-type receiver unit (2) which is positioned above and oriented downwards, and is connected to a CPU (3) in such a way as to transmit to the spraying machine commands which for example are correlated to the dimensions and/or form and/or position of the parts in transit.

## Description

The invention relates to a device for detecting the transit and characteristics of dimensions and/or form of panels or other basically flat parts placed on a conveyor line, and for controlling any processing means, for example in order to control the activation, deactivation and movement of the guns to spray paint or other products onto the said parts during transit through the booth of an automatic spraying machine.

In these types of machines, or in machines which have similar requirements, it is important to recognise the profile, dimensions and location on the conveyor of the parts to be painted or to be subjected to other spray treatments, at the moment when the said parts are about to enter the spray booth, in order then to be able to economise on the product to be sprayed, so as to prevent wastage of this product and to prevent product from being sprayed in areas which are not occupied by the parts.

For this purpose, it is known to place upstream from the spray booth reading systems consisting of at least one optoelectronic barrier which comprises a receiver unit consisting of a plurality of photodiodes inserted in a support bar, where these components are disposed on at least one line, and adjacent to one another at a distance such as to comply with the resolution required, and which comprises a lighting unit opposite the said receiver unit, the two units being disposed such that the parts which are being moved towards the spray machine pass between them. The part in transit, which is usually opaque and is supported flat on a horizontal supply conveyor, is consequently passed by the latter between the transmitter and receiver units of the said optoelectronic barrier, such as to obscure partly the beam of light which comes from the source of light, thus preventing the beam from illuminating the corresponding photodiodes of the receiver unit, which communicates via an interface with a CPU system which can recognise the form and dimensions of the said parts, including by means of known parameters of the speed of transit of the part and by means of appropriate algorithms, and can process these variables, transforming them into a command for the spray guns, such as to open the guns only in the presence of the part below them, and to an extent equivalent to the detected dimensions of the said part.

The limits of this known solution can be summarised as follows:
- in order to recognise the dimensions of length and width and the position in space of the parts, it is necessary to make the said parts pass through the optoelectronic barrier which must be placed in on interruption between the conveyor means, the lighting unit and the receiver unit can be placed respectively below and above the parts in transit. It is therefore necessary to provide an interruption in the conveyor means, with corresponding problems which result from this, including safety problems;
- it is necessary to provide a component of the optoelectronic barrier, below the surface for conveying of the parts, such that this component may gradually become dirty, and must consequently be subjected to periodic and frequent maintenance operations;
- it is not possible to read the forms and dimensions of parts when they are placed on temporary support surfaces, for example on trays or disposable strips of paper, since the system detects only the characteristics of the support surface.

In order to eliminate these disadvantages, it is known at present to use video camera systems which are costly, complex to manage, and are strongly influenced by the colour of the parts to be detected and by the background of the conveyor and/or of any temporary support surface for the parts.

The invention is intended to eliminate these limitations of the prior art by means of a device which is easy to implement and technologically highly reliable, and has a limited cost since it uses receiver and signal processing units of the same type as those of the present optoelectronic barriers, and is based on the solution concept according to Claim 1) and the subsequent dependent claims. The solution concept according to the invention can be summarised as follows.

Onto the parts in transit on the conveyor there is directed a sheet of laser light produced by one or more sheet-producing lasers with a suitable power level, which are oriented with their longitudinal axis such as to form in relation to the panel-carrying conveyor below them an acute angle with an amplitude such that the line of laser light which they project transversely onto the said conveyor and/or onto the upper surface of the panel can be detected or otherwise by at least one photodiode-type receiver unit of a type similar to that currently in use, which is now positioned above and oriented downwards.

Further characteristics of the invention and the resulting advantages will become more apparent from the following description of some preferred embodiments of it, illustrated purely by way of non-limiting example in the figures in the attached drawings, in which:
- figures 1 and 2 are schematic lateral views of the device shown respectively in the condition of absence and presence of a part in transit below the detection device;
- figures 1a and 2a are schematic and plan views from above which illustrate the functioning of the device in the condition in figure 1 and in that in figure 2 respectively;
- figure 3 illustrates schematically and in a transverse view a possible optoelectronic barrier which is positioned laterally relative to the panel-carrying conveyor, for redundancy checking in secure conditions of the functioning of the device in question;
- figures 4 and 5 are schematic lateral views of the device in a different form of use, which makes it possible to detect whether or not the part in transit is present, as well as portions with different heights of the said part;
- figures 4a and 5a are schematic and plan views from above which illustrate the functioning of the device in the condition in figure 4 and in that in figure 5 respectively;
- figure 6 is a flowchart which illustrates the functioning of the device in the version with the redundant optoelectronic barrier.

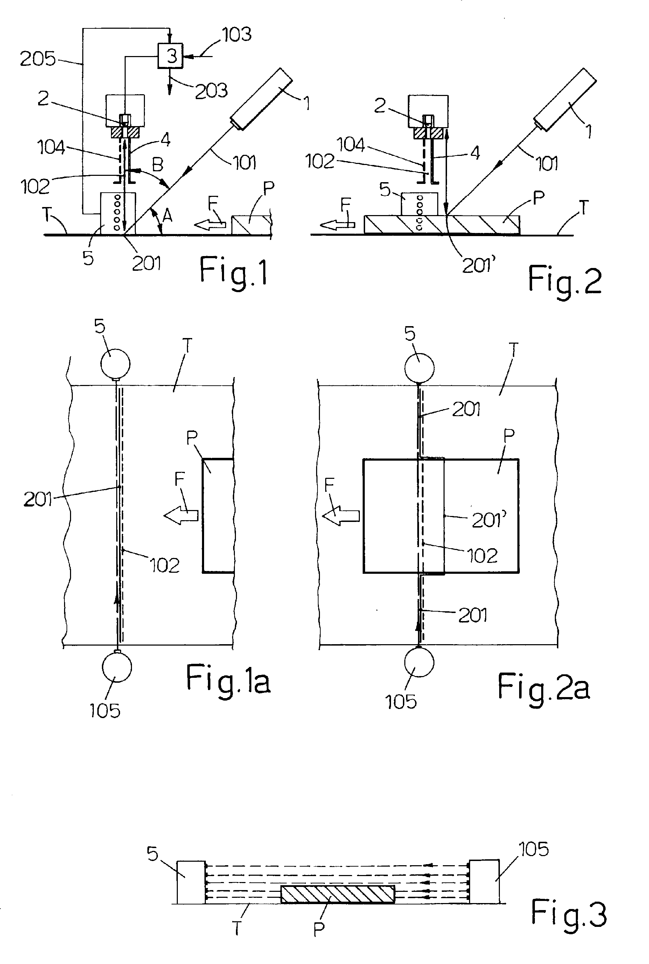

Figure 1 shows that the device comprises above the path of the parts P to be detected one or more emitters 1 which can produce a sheet of light, for example sheet-producing lasers with a suitable power level, which are oriented towards the conveyor T for advance of the parts or panels P which are being conveyed towards the spraying machine, and which are positioned with their longitudinal axis such as to form an acute angle A of the correct amplitude in relation to the conveyor, and such as to be oriented for example in the same direction of advance F as the parts P.

The emitters 1, which are referred to in brief hereinafter also by the term lasers, generate a linear, flat sheet of light 101, which, when it touches for example the upper surface of the conveyor T, projects onto the latter a line of light 201 transversely to the path F of advance of the panels P, see figure 1a, and vertically above this line of light there is positioned a parallel receiver bar 2 with photodiodes which are oriented downwards, and which, as in the prior art, is connected for example to a CPU 3 of a conventional type, with an input 103 which receives the signal corresponding to the speed of advance of the panels from the encoder of the conveyor T drive motor, and which by means of its output 203 will command functioning of the guns of the spraying machine into which the parts P are introduced. The vertical plane 102 for viewing or reading of the bar 2 is positioned relative to the radiation 101 generated by the emitter 1 at an angle B suitable for assisting reading of the said line of light 201 by the bar 2, for example with an angle B which is equal to that A of incidence of the radiation 101 on the surface of the conveyor T, taking into consideration however the characteristics of sensitivity of the said photodiode bar 2 relative to the radiation emitted by the laser 1, and if appropriate also the optical characteristics of the visible surface of the parts P being processed.

In a possible form of functioning of the device, as already stated with reference to figures 1 and 1a, in the absence of parts P in transit below the device, the line of laser light 201 projected onto the conveyor T or onto any temporary support surface for the parts P (which support is not illustrated in the drawings), is read by the photodiode bar 2, along its entire length. In this case, the CPU 3 generates a signal indicating no parts in transit.

If, on the other hand, as illustrated in figures 2 and 2a, a part P is being conveyed on the conveyor T of the machine, and intercepts the said sheet of light 101 emitted by the laser 1, the sheet of light projects onto the upper surface of the panel, and across the full width of the latter, a line of light 201' which is displaced laterally relative to the vertical viewing plane 102 of the reading bar 2, with displacement by an amount which is proportional to the thickness of the panel, and to the angle of incidence on the latter of the radiation 101, such that the said projected line of light 201' is not detected by the reading bar 2. Consequently, the CPU 3 will be able to distinguish the beginning and end, and therefore the length of the part in transit, its width and its position on the width of the conveyor T, such that the output 203 of the CPU will be able to issue the commands necessary to control the guns of the spraying machine accordingly, logically and at the correct moment, when the parts P are in transit through the latter, so as to prevent unnecessary and costly waste of sprayed product.

It is apparent that the solution concerned does not require the presence of interruptions in the system T for conveying of the parts P, that both the components of the new optoelectronic system concerned are positioned at the top and oriented downwards, and are therefore protected against dirt, and that the device can also detect the form, dimensions and position of parts, even if the latter are supported on a temporary surface.

In order to distinguish in the best possible way the line of light 201 projected by the laser onto the transport surface T from that 201' which is projected by the same laser onto the upper surface of the part in transit, use is preferably made of at least one vertical screen 4, at the reading bar 2, in a position adjacent to the viewing plane 102 of the bar 2, between the latter and the laser emitter(s) 1, and this screen will be sufficiently opaque and impermeable to the nearby beam of light 101. The screen 4 can be an added-on plate, or it can be formed by a part of the support structure of the reading bar 2. The use of a screen 4 of this type is moreover also known in current optoelectronic detection systems which use photodiode receiver bars. If necessary, as illustrated in figures 1 and 2 by means of a broken line, a similar screen 104 can be provided parallel to the aforementioned one 4, for the sole purpose of confining the reading diodes of the bar 2 in a sufficiently large chamber, which could improve the sensitivity of the photodiodes and in any case could protect them efficiently against dirt.

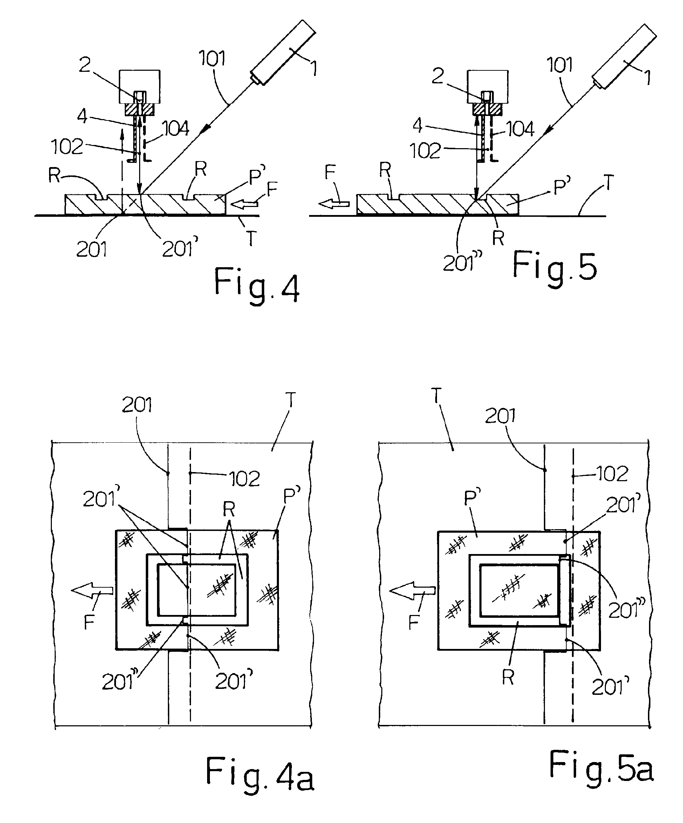

By regulating appropriately the position on the horizontal plane of the laser source(s) 1 and/or of the corresponding reading bar 2 using corresponding regulation or positioning means, it is possible to ensure that the line of light projected downwards by the incident sheet of light 101 is detected by the bar 2, not in the absence of parts on the conveyor plane T as in the previous solution seen in figures 1 and 2, but in the presence of parts which are in transit and have a predetermined height. Figures 4 and 4a illustrate a solution of this type, according to which the viewing plane 102 of the detection bar 2 is placed vertically above the line of light 201' which is projected by the laser 1 onto the upper surface of the parts P of known height or thickness, whereas in the absence of parts, or if the parts are not present, the line of light 201 projected by the laser onto the surface of the conveyor T is disposed laterally relative to the said viewing plane 102 of the bar 2, which does not detect the presence of parts P.

This solution can be particularly advantageous for machines which for example serve the purpose of applying glue to profiled wings P', which for example contain sections R which are recessed (or raised), to which for example it is necessary to be able to apply glue so as subsequently to be able to fit inserts into them. In this case, the discontinuity of lighting 201" which is not detected, or is detected with low intensity by the main bar 2, is interpreted by the system as being caused by the presence of the said recesses (or raised parts) R, onto which the CPU 3 will then command spraying of glue at the appropriate time during the transit of the wing through the spraying machine.

In the device, it is possible to set the maximum number of photodiodes which can be recognised as discontinuity, so that in excess of this number the device considers that the part is absent. By this means it is easily possible to recognise the edges of a part onto which the product must then be sprayed correctly, thus avoiding unnecessary waste of the product outside the said edges.

By developing further this last solution, several main reading bars 2 can be arranged adjacent to one another in order to identify different heights of the parts in transit, which by this means could have a form which is more complex than that of a panel, and could also have a slight vertical development, since the new solution would also make it possible to read the vertical profile of these parts.

In the presence of greatly reduced lighting values of the radiation 101 on the surface illuminated by this radiation, for example because of the porous nature and/or the colour of the conveyor system T, or because of any temporary support surface for the parts P, the device in question may not be able to distinguish the part from the surface on which it is supported. In order to eliminate this disadvantage, there may be placed transversely to the passage of the parts, and laterally relative to the conveyor T, an optoelectronic barrier of a type which is conventional but is positioned vertically, and is provided on one side of the conveyor with a unit 105 for emission of light, and provided on the opposite side of the same conveyor with a photodiode-type receiver unit 5, which by means of the shunt 205 can advantageously be connected to the CPU 3, as shown in figure 1, in order to confirm to the latter and to the entire control system whether or not a panel or part P is in transit, even if it cannot confirm the width or position on the horizontal conveyor surface of the part.

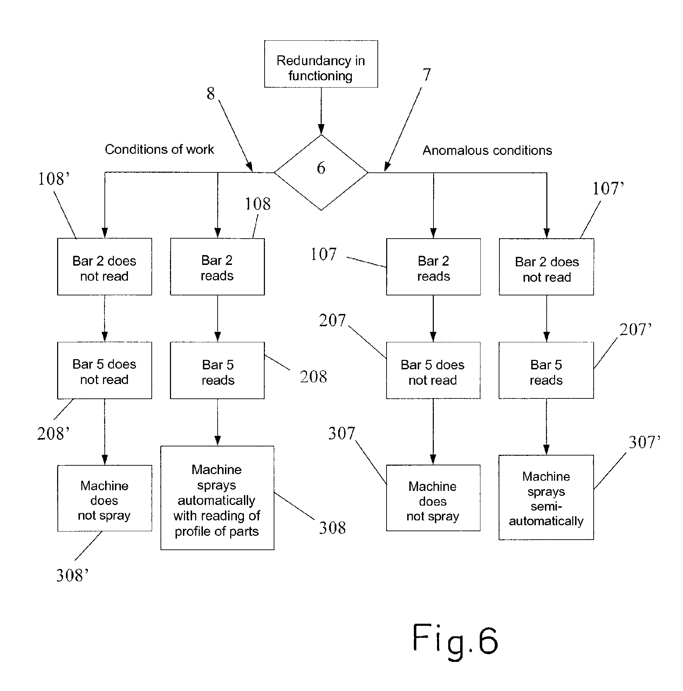

As illustrated in the flowchart 6 in figure 6, in anomalous operating conditions, as indicated in the right-hand branch 7 of this diagram, in the case of reduced laser light projected onto the conveyor system T and corresponding low lighting of the main bar 2, which however could be considered as a signal for transit of a part, as indicated by the block 107, and in the case of non-interception by the parts of the light which passes between the portions 105, 5, and therefore in the case of non-reading of the secondary bar 5, as indicated by the block 207, the said condition is considered by the system to be a reading anomaly, and the reading system is temporarily deactivated, such that the CPU 3 sends the machine a signal not to spray, as indicated by the block 307.

On the other hand, in the case in which the bar 2 of the main system does not detect laser light lines, and cannot detect the transit of parts, as indicated by 107', and on the other hand the light received by the transverse photocells 5 is intercepted by the parts in transit, and thus in the case of reading by the secondary bar 5, as indicated by 207', this condition is interpreted by the CPU 3 as passage of parts with the maximum width acceptable by the conveyor T, or for a percentage of this width which can be set by the operator interface, and the CPU commands spraying with a semiautomatic cycle which is based on the actual length of the part detected by the secondary barrier 5, 105, and for a maximum length or a length pre-set by the operator, as indicated by the block 307' in figure 6.

In normal operating conditions of the device, as indicated by the left-hand branch 8 of the flow diagram in figure 6, if the main bar 2 reads, as indicated by the block 108, and if the secondary bar 5 also reads, as indicated by 208, the CPU 3 produces a signal which at the appropriate moment commands automatic spraying by the machine, based on the detected dimensions of the parts in transit. If on the other hand the bar 2 does not read, as indicated by the block 108', and if the secondary bar 5 also does not read, as in the block 208', the CPU interprets the signals as no parts in transit, and commands the machine not to spray at the appropriate moment, as indicated by the block 308'.

## Claims

1. Device for detecting the transit and/or characteristics of dimensions and/or form of panels or other basically flat parts on a conveyor line, and for controlling any processing means, for example in order to control the activation, deactivation and movement of the guns to spray paint or other products onto the said parts during transit through the booth of an automatic spraying machine, **characterised in that** it comprises one or more laser sources (1) with a suitable power level, or other suitable means which can generate a sheet of light (101) directed onto the parts in transit, the said laser source(s) being oriented with its/their longitudinal axis such as to form in relation to the parts-carrying conveyor below an angle (A) of less than 90°, and with an amplitude such that the line of laser light (201, 201') projected by the sources transversely onto the said conveyor and/or onto the upper surface of the panel can be detected or otherwise by the appropriately oriented field of view or viewing plane (102) of at least one photodiode-type receiver unit (2) which is positioned above and oriented downwards, and is connected to a CPU (3) in such a way as to transmit to the spraying machine commands which for example are correlated to the dimensions and/or form and/or position of the parts in transit.

2. Device according to Claim 1, **characterised in that** the photodiode-type receiver bar (2) is placed with its viewing plane (102) vertically above the line of light (201) projected by the sheet of laser light (101) onto the upper surface of the conveyor (T) for advance of the parts (P), all such that in the absence of parts (P) in transit below the device concerned, the said line of laser light (201) which is projected onto the conveyor (T) or onto any temporary support surface for the said parts (P) is read by the photodiode bar (2) along its entire length, while the CPU (3) processes a signal for no panels in transit, whereas when a part (P) is being conveyed on the said conveyor (T) and intercepts the said sheet of light (101) emitted by the laser (1), this sheet of light projects onto the upper surface of the part, and along the entire length of the latter, a transverse line of light (201') which is displaced laterally relative to the viewing plane (102) of the reading photodiode bar (2), with a displacement proportional to the thickness of the part which is being conveyed and to the angle (A) of incidence on the latter of the said sheet of light (101), such that the said projected line of light (201') projected is not detected by this reading bar (2), and the CPU (3) which is connected to the latter can distinguish the start and end, and therefore the length, of the part in transit, its width, and its position in the transverse direction on the conveyor T, and can thus supply the commands necessary in order to control accordingly and logically the guns of the spraying machine, so as to avoid unnecessary and costly waste of product sprayed.

3. Device according to Claim 2, wherein the vertical viewing or reading plane (102) of the said photodiode bar (2) is placed relative to the sheet of light (101) generated by the emitter (1) at an angle (B) which can assist the reading by the said bar (2) of the said line of light projected onto the plane (201), for example at an angle (B) which is equal to the angle (A) of incidence of the said sheet of light (101) on the surface of the conveyor (T), while taking into consideration the characteristics of sensitivity of the said photodiode bar (2) in relation to the radiation emitted by the emitter, and, if appropriate, also the optical characteristics of the surface on view of the parts (P) in transit.

4. Device according to the preceding claims, **characterised in that**, in order to distinguish in the best way the line of light (201) projected by the sheet-type laser(s) (1) onto the conveyor plane (T) from that (201') which is projected by the said lasers onto the upper surface of the part in transit (P), use is preferably provided of at least one vertical screen (4) at the reading photodiode bar (2), in a position adjacent to the viewing plane (102) of the said bar (2), between the latter and the emitter(s), this screen being opaque and impermeable to the adjacent incident laser light beam (101).

5. Device according Claim 4, wherein a second screen (104) can be provided parallel to the aforementioned screen (4), in order to confine the reading diodes of the bar (2) in a chamber with sufficient amplitude, which can optionally improve the sensitivity of the said photodiodes and can protect them against dirt.

6. Device according to one or more of the preceding claims, **characterised in that** it comprises optional means for regulating or stabilising appropriately the position on the horizontal plane of the laser source(s) (1) and/or of the said corresponding reading bar (2), in order that the line of light projected downwards by the said laser (1) is detected by the said bar (2) in the presence of parts (P) in transit which have a predetermined height, in which case the viewing plane (102) of the detection bar (2) is placed vertically above the line of light (201') which is projected by the laser onto the upper surface of the parts (P) in transit, which parts have a known height or thickness, whereas in the absence of parts, or when the parts are not present, the line of light (201) which is projected by the laser (1) onto the surface of the conveyor (T) or onto a temporary surface covering this surface, is disposed laterally relative to the said viewing plane (102) of the main bar (2), which does not detect the presence of the part (P).

7. Device according to Claim 6, **characterised in that** it can be particularly suitable for distinguishing the presence on the upper surface of the part in transit (P) of portions which are raised or recessed (R), which cause a discontinuity of lighting of the main bar (2), and means are provided for interpreting this discontinuity as being caused by the presence of the said recesses or raised parts (R), which can be suitably processed when passing through the spraying machine.

8. Device according to Claim 7, **characterised in that** provision is made for setting a maximum number of photodiodes of the main bar (2) which can be recognised as discontinuity of planarity of the upper surface of the parts in transit (P), and **in that** it comprises means for ensuring that, in addition to maximum discontinuity, the said device considers that the part is absent, all such as to be able to distinguish correctly the edges of the parts in transit, in order then to command correct spraying of these edges, without excessive waste of product sprayed outside the latter.

9. Device according to one or more of Claims 6 onwards, **characterised in that** it can comprise several main reading bars (2) placed adjacent to one another, in order to identify different heights of the parts (P) in transit, which can thus have a form which is more complex than that of a panel, and can also have vertical development.

10. Device according to one or more of the preceding claims, **characterised in that** it comprises laterally relative to the conveyor (T) for advance of the parts (P) an optoelectronic barrier which is of a conventional type but is positioned vertically, and is provided on one side of the said conveyor with a unit (105) for emission of light, and is provided on the opposite side of the same conveyor with a photodiode-type receiver unit (5), which by means of a shunt (205) can advantageously be connected to the said CPU (3), in order to confirm to the latter and to the entire control system whether a part (P) is in transit or not.

11. Device according to Claim 10, **characterised in that** it comprises means for ensuring that if the said photodiode bar (2) of the main system substantially does not detect projected lines of laser light, and therefore does not read, and if on the other hand the said secondary bar (5) reads that parts are in transit, this signal is interpreted by the CPU (3) as the passage of parts with the maximum width acceptable by the conveyor (T), or with a percentage of this width which can be set through the operator interface, and the said CPU commands spraying with a semiautomatic cycle which is based on the actual length of the part detected by the said secondary bar (5), and for a maximum width or a width which is pre-set by the operator.

12. Device according to Claim 10, **characterised in that** it comprises means for ensuring that in normal conditions of work of the said device, if the said main bar (2) reads, and if the said secondary bar (5) also reads, the CPU (3) can generate a signal which commands automatic spraying of the machine at the appropriate moment when the parts are conveyed into it, in relation to the dimensions and other detected parameters of the parts in transit, whereas if the said main bar (2) does not read, and if the said secondary bar (5) also does not read, the CPU (3) interprets the signals as the absence of parts in transit, and commands the machine not to spray in the appropriate subsequent stage.
